# EUROPEAN PATENT APPLICATION

(11) **EP 4 020 623 A1**
(43) Date of publication of application: **29.06.2022**
(21) Application number: 21838115.0
(22) Date of filing: 15.06.2021
(51) Int. Cl.: H01M 4/133, H01M 4/587, H01M 4/36, H01M 4/62, H01M 10/0525

(54) **ANODE HAVING IMPROVED RAPID-CHARGE PROPERTY, AND LITHIUM SECONDARY BATTERY**

(30) Priority: 10.07.2020 KR 20200085254
(71) Applicant: LG ENERGY SOLUTION, LTD., Seoul 07335 (KR)
(72) Inventor: CHOI, Hee Won, Daejeon 34122 (KR)
(74) Representative: Plasseraud IP
(86) International application number: PCT/KR2021/007479
(87) International publication number: WO 2022/010121

(57) **Abstract**

An anode for a lithium secondary battery, of the present invention, comprises: a first anode active material layer arranged on a current collector; and a second anode active material layer arranged on the first anode active material layer, wherein the first anode active material layer comprises uncoated artificial graphite and the second anode active material layer comprises coated artificial graphite. An anode for a lithium secondary battery, and a lithium secondary battery comprising same, of the present invention, have an improved rapid-charge property.

## Description

### [Technical Field]

This application claims the benefit of priority based on Korean Patent Application No. 10-2020-0085254, filed on July 10, 2020, and the entire contents of the Korean patent application are incorporated herein by reference.

The present invention relates to a negative electrode of a two-layer structure including a coated artificial graphite and a uncoated artificial graphite as a negative electrode active material, in which the uncoated artificial graphite is applied to a lower portion, and the coated artificial graphite is applied to an upper portion, and a lithium secondary battery including the negative electrode.

### [Background Art]

As technologies for mobile devices are developed and demand for the mobile devices increases, there has been a rapid increase in demand for secondary batteries as energy sources. Among such secondary batteries, lithium secondary batteries, which exhibit a high energy density and operational potential, a long cycle life, and a low self-discharge rate have been commercialized and widely used.

Conventionally, lithium metal has been used as the negative electrode of the secondary battery, but as the danger of a battery short circuit according to formation of a dendrite and an explosion thereby comes to the fore, the use of the carbon-based active material which allows intercalation and deintercalation of reversible lithium ions and maintains structural and electrical properties is drawing attention.

Various types of carbon-based materials such as artificial graphite, natural graphite, and hard carbon have been used as the carbon-based active material, and among them, the graphite-based active material capable of securing lifespan characteristics of the lithium secondary battery by an excellent reversibility is most widely used.The graphite-based active material is cheap, structurally stable, and has a discharge voltage of -0.2V which is lower than that of lithium. As such, a battery, which is made by using the graphite-based active material, may show a high discharge voltage of 3.6V, which provides many advantages in terms of energy density of a lithium battery.

However, graphite has problems due to formation of a complicated solid electrolyte interface (SEI) and volume expansion.An SEI layer, which shows a physical barrier between lithium-ionized carbon, electrolyte and binder, may cause an irreversible charge loss and influence a long time cycle stability of a lithium secondary battery.Also, since graphite has a layered structure, the volume expansion occurs during the electrochemical reaction.This volume expansion causes the capacity loss of graphite negative electrode by a long time charge/discharge.

The graphite may include natural graphite which is generated and mined in nature, and artificial graphite which is manufactured by heat treating coal-based and petroleum-based pitch, etc. at a temperature of 2,500°C or more.Natural graphite has a high graphitization degree and a high lithium ion storage capacity and is cheap, compared to artificial graphite.However, since particles of natural graphite have a needle or flaky structure and have a large surface area due to their irregular structures, and the edge surfaces are easily exposed, irreversible reaction may significantly occur as the edge surface is peeled off or broken by permeation or decomposition reaction of the electrolyte when applied to a battery.Further, since flaky particles may be easily oriented toward the plane on the current collector, the natural graphite has a poor wettability with the electrolyte solution and a low electrode density .Hence, artificial graphite was usually used as the negative electrode active material for a secondary battery.In particular, artificial graphite is still used for products which require a long lifespan and high output characteristics.

Further, recently, an interest in a rapid charging technology of a negative electrode using artificial graphite is on the increase, but commercialization is not easy due to volume expansion of a negative electrode and deterioration of stability of the negative electrode at the time of charge/discharge.As such, there is a need for a technology about a negative electrode having improved rapid charging performance.

### [Disclosure]

### [Technical Problem]

An object of the present invention is to improve rapid charging performance, capacity and energy density in a negative electrode for a lithium secondary battery which uses artificial graphite as a negative electrode active material.

### [Technical Solution]

A negative electrode for a lithium secondary battery according to the present invention includes: a first negative electrode active material layer arranged on a current collector; and a second negative electrode active material layer arranged on the first negative electrode active material layer, wherein the first negative electrode active material layer contains uncoated artificial graphite, and wherein the second negative electrode active material layer contains coated artificial graphite.

In an embodiment of the present invention, a weight ratio of the uncoated artificial graphite to the coated artificial graphite is in a range of 4: 6 to 6: 4 based on a total weight of a negative electrode active material.

In an embodiment of the present invention, a weight ratio of the uncoated artificial graphite to the coated artificial graphite is in a range of 44: 55 to 55: 45 based on a total weight of a negative electrode active material.

In an embodiment of the present invention, a negative electrode active material of the first negative electrode active material layer is uncoated artificial graphite, and a negative electrode active material of the second negative electrode active material layer is coated artificial graphite.

In an embodiment of the present invention, the coated artificial graphite is formed of an artificial graphite core and a carbon coating layer which coats the artificial graphite core.

In an embodiment of the present invention, an average particle diameter (D₅₀) of the uncoated artificial graphite is in a range of 15 *µ*m to 22 *µ*m*.*

In an embodiment of the present invention, an average particle diameter (D₅₀) of the coated artificial graphite is in a range of 13 *µ*m to 20 *µ*m.

In an embodiment of the present invention, a content of a binder contained in the first negative electrode active material layer is in a range of 0.5 to 5% by weight in range greater than a content of a binder contained in the second negative electrode active material layer.

In an embodiment of the present invention, particles of the uncoated artificial graphite are secondary artificial graphite particles formed by aggregation of one or more primary artificial graphite particles.

In an embodiment of the present invention, particles of the coated artificial graphite are secondary artificial graphite particles formed by aggregation of one or more primary artificial graphite particles.

In an embodiment of the present invention, the first negative electrode active material layer and the second negative electrode active material layer further includes a conductive material, and a content of the conductive material is in a range of 0.1 to 5% by weight of the negative electrode active material layer.

A lithium secondary battery of the present invention includes the negative electrode.

### [Advantageous Effects]

According to a negative electrode for a lithium secondary battery and a lithium secondary battery including the same of the present invention, lithium plating is effectively prevented at the time of rapid charging, and the rapid charging performance is improved.

### [Detailed Description of the Preferred Embodiments]

Hereinafter, the present invention will be described in detail. The terms and words used in the present specification and claims should not be construed as limited to ordinary or dictionary terms and the inventor may properly define the concept of the terms in order to best describe its invention. The terms and words should be construed as meaning and concept consistent with the technical idea of the present invention.

In this application, it should be understood that terms such as "include" or "have" are intended to indicate that there is a feature, number, step, operation, component, part, or a combination thereof described on the specification, and they do not exclude in advance the possibility of the presence or addition of one or more other features or numbers, steps, operations, components, parts or combinations thereof.Also, when a portion such as a layer, a film, an area, a plate, etc. is referred to as being "on" another portion, this includes not only the case where the portion is "directly on" the another portion but also the case where further another portion is interposed therebetween. On the other hand, when a portion such as a layer, a film, an area, a plate, etc. is referred to as being "under" another portion, this includes not only the case where the portion is "directly under" the another portion but also the case where further another portion is interposed therebetween. In addition, to be disposed "on" in the present application may include the case disposed at the bottom as well as the top.

Hereinafter, the present invention will be described in detail.

A negative electrode for a lithium secondary battery of the present invention includes: a first negative electrode active material layer arranged on a current collector; and a second negative electrode active material layer arranged on the first negative electrode active material layer, wherein the first negative electrode active material layer contains uncoated artificial graphite, and wherein the second negative electrode active material layer contains coated artificial graphite.

In one specific example, a negative electrode active material of the first negative electrode active material layer is uncoated artificial graphite, and a negative electrode active material of the second negative electrode active material layer is coated artificial graphite. Namely, 100% of the negative electrode active material contained in the first negative electrode active material layer of the lower layer is uncoated artificial graphite, and 100% of the negative electrode active material contained in the second negative electrode active material layer of the upper layer is coated artificial graphite. The negative electrode for a lithium secondary battery having such a structure has an improved rapid charging performance.

Artificial graphite has excellent charge/discharge characteristics and excellent charging speed, compared to natural graphite. The inventors of the present invention have found that the rapid charging performance of a negative electrode of a two layer structure having artificial graphite applied thereto, where uncoated artificial graphite has been selected as the negative electrode active material of the lower portion, and coated artificial graphite has been selected as the negative electrode active material of the upper portion, has been much more improved than the rapid charging performance of the negative electrode, to which coated artificial graphite has been applied by 100%, or the negative electrode, to which uncoated artificial graphite has been applied by 100%, which has led the inventors to the present invention.

In a desired example of the present invention, the weight ratio of the uncoated artificial graphite to the coated artificial graphite may be in a range of 4: 6 to 6: 4 based on the total weight of the negative electrode active material, and more preferably in a range of 45: 55 to 55: 45.The increase of the content of the coated artificial graphite of the upper portion may be preferable in terms of the rapid charging performance, but since the hardness of the coated artificial graphite is greater than that of the uncoated artificial graphite, a crack may be generated during rolling, and thus the weight ratio of the uncoated artificial graphite and the coated artificial graphite is preferably in the above numerical value range.Further, when the weight ratio of the uncoated artificial graphite and the coated artificial graphite is in the above range, the coating process by a dual slot die coater is easy, and particularly, in the case of a battery having a large capacity, when the above range of weight ratio is exceeded, it may negatively influence the electric characteristics of the battery. Further, the weight ratio of the uncoated artificial graphite of the lower portion and the coated artificial graphite of the upper portion may be controlled by appropriately adjusting the loading amount of the electrode slurry discharged from the coater.

The current collector is not particularly limited as long as it has conductivity without causing a chemical change in the secondary battery.For example, copper, stainless steel, aluminum, nickel, titanium, calcined carbon, or what is generated by processing the surface of aluminum or stainless steel with carbon, nickel, titanium, silver, etc. may be used as the current collector.Specifically, transition metal, which easily adsorbs carbon, such as cooper or nickel, may be used as the current collector.The thickness of the current collector may be in a range of 6 to 20 µm, but the thickness is not limited thereto.

The negative electrode active material layer of the present invention may be arranged on the current collector.Specifically, the negative electrode active material layer may be arranged on one surface of the current collector or both surfaces of the current collector.The negative electrode active material layer includes a first negative electrode active material layer and a second negative electrode active material layer.

The first negative electrode active material layer may be arranged between the current collector and the second negative electrode active material layer.The first negative electrode active material layer may contact the current collector.

The uncoated artificial graphite is contained in the first negative electrode active material layer.The uncoated artificial graphite particles are preferably secondary artificial graphite particles formed by aggregation of the primary artificial graphite particles.The average particle diameter (D₅₀) of uncoated artificial graphite is in a range of 15 to 22 µm, more preferably in a range of 16 to 21 µm, and most preferably in a range of 17 to 20 µm.When the average particle diameter (D₅₀) of the uncoated artificial graphite particles is less than the lower limit, the specific surface area increases, which makes uniform mixing difficult at the time of preparing a slurry for a secondary battery electrode. If the average particle diameter (D₅₀) of the uncoated artificial graphite particles is greater than the upper limit, the preparation of an electrode film may be difficult.

In the present specification, the average particle diameter may be the value measured as the weight average D₅₀ (particle diameter or median diameter when the cumulative weight corresponds to 50% of the total weight) in measuring the particle size distribution by a laser diffraction method.

The content of the uncoated artificial graphite contained in the first negative electrode active material layer may be 90 to 99% by weight based on the total weight, more specifically 93 to 97% by weight.

The uncoated artificial graphite particles may be secondary artificial graphite particles formed by aggregation of the primary artificial graphite particles.When artificial graphite particles are secondary artificial graphite particles composed of a set of primary artificial graphite particles, first pores may exist inside the secondary artificial graphite particles. The first pores may be empty space between primary artificial graphite particles, and amorphous, and the number of the first pores may be two or more.The first pores may be extended to the surface of the secondary artificial graphite particles to be exposed to the outside, may exist only at the inside of the secondary artificial graphite particles, or may have various forms.

The primary artificial graphite particles may be formed after the carbon precursor has been made into powder.Specifically, the primary artificial graphite particles may be formed by making the carbon precursor into powder, then charging the powder in the device, and heating the powder at a temperature of 500 to 3000°C, preferably 700 to 2700°C.The carbon precursor may be one or more selected from the group consisting of coal-based heavy oil, fiber-based heavy oil, tar, and pitch. The powder of the primary artificial graphite particles formed of carbon precursors made of powder may be further aggregated, thereby preferably forming primary artificial graphite particles having a high hardness.

In the case that the artificial graphite particles are secondary artificial graphite particles formed by aggregation of one or more primary artificial graphite particles, the secondary artificial graphite particles may be formed by injecting primary artificial graphite particles into a reactor, and allowing the primary artificial graphite particles to be aggregated by centrifugal force by spinning the primary artificial graphite particles by operating the reactor.In the process of aggregating the primary artificial graphite particles, the pitch and resin binder together with the primary artificial graphite particles were put in the reactor, which was then heat-treated at a temperature of about 1200 to 1800°C.After obtaining secondary artificial graphite particles generated by aggregation of the primary artificial graphite particles, an additional heat treatment process may be performed for the secondary artificial graphite particles.Since the primary artificial graphite particles may be coupled or rearranged through the heat treatment process, the microstructure of the secondary artificial graphite particles may be improved.

The uncoated artificial graphite preferably has a high theoretical capacity. For example, the theoretical capacity of the uncoated artificial graphite may be 350mAh/g or more, preferably 355 to 365 mAh/g, and more preferably 358 to 364 mAh/g.

The second negative electrode active material layer may be arranged on the first negative electrode active material layer. Specifically, the second negative electrode active material layer may be spaced apart from the current collector while having the first negative electrode active material layer therebetween.

The coated artificial graphite, which is an active material contained in the second negative electrode active material layer, is preferably composed of an artificial graphite core and a carbon coating layer which coats the artificial graphite core.The artificial graphite core may be the above-described uncoated artificial graphite.

The carbon coating for the graphite functions to form uniform SEI layer and prevent volume expansion and improves the charge/discharge performance of a lithium secondary battery. However, the carbon coating layer of the coated artificial graphite of the present invention may facilitate movement of lithium ions in the artificial graphite particles, lower charge transfer resistance of lithium ions, improve a structural stability, compared to other carbon-based particles, and further improve the rapid charging performance of a battery.

The carbon coating layer may contain amorphous carbon, and may specifically contain at least one selected from the group consisting of soft carbon and hard carbon, and preferably contain soft carbon.

The carbon coating layer may be formed by providing one or more selected from the group consisting of coal tar pitch, rayon and polyacrylonitrile-based resin, or a precursor thereof to the surface of the artificial graphite particle, and then performing thermal decomposition.The heat treatment process for forming the carbon coating layer may be performed in a temperature range of 1000 to 4000°C.At this time, when the heat treatment process is performed at a temperature of 1000°C or less, it may be difficult to form a uniform carbon coating layer, and when the heat treatment process is performed at a temperature of 4000°C or more, the carbon coating layer may be excessively formed during the process.

The average particle diameter (D₅₀) of the coated artificial graphite of the present invention is in a range of 13 to 20 µm, more preferably in a range of 14 to 19 µm, and most preferably in a range of 15 to 19 µm.When the average particle diameter (D₅₀) of the coated artificial graphite particles is less than the lower limit, the specific surface area increases, which makes uniform mixing difficult at the time of preparing a slurry for a secondary battery electrode. If the average particle diameter (D₅₀) of the coated artificial graphite particles is greater than the upper limit, the preparation of an electrode film may be difficult.

The theoretical capacity of the coated artificial graphite may be 340 mAh/g or more, preferably 345 to 360 mAh/g, and more preferably 348 to 355 mAh/g.

The content of the coated artificial graphite contained in the second negative electrode active material layer may be 90 to 99% by weight based on the total weight of the second negative electrode active material layer, and more specifically 93 to 97% by weight.

The first negative electrode active material layer and the second negative electrode active material layer may further include a conductive material, respectively.At this time, the content of the conductive material contained in the first negative electrode active material layer and the second negative electrode active material layer may be 0.1 to 5% by weight, respectively.

The conductive material is not particularly limited as long as it has electrical conductivity without causing a chemical change in the battery, and examples thereof include graphite such as natural graphite and artificial graphite; carbon black such as carbon black, acetylene black, Ketjen black, channel black, furnace black, lamp black, and thermal black; conductive fibers such as carbon fiber and metal fiber; conductive tubes such as carbon nanotube; metal powders such as carbon fluoride, aluminum and nickel powder; conductive whiskey such as zinc oxide and potassium titanate; conductive metal oxides such as titanium oxide; and conductive materials such as polyphenylene derivatives and the like.

The first negative electrode active material layer and the second negative electrode active material layer may further include a binder, respectively.At this time, a content of a binder contained in the first negative electrode active material layer may be in a range of 0.5 to 5% by weight in range greater than a content of a binder contained in the second positive electrode active material layer.The adhesive force between the current collector and the active material layer may be improved by setting the content of the binder contained in the first negative electrode active material layer contacting the current collector to be relatively greater than the content of the binder contained in the second active material layer.

The binder may contain at least one selected from the group consisting of polyvinylidenefluoride - hexafluoropropylene copolymer (PVDF-CO-HFP), polyvinylidenefluoride, polyacrylonitrile, polymethylmethacrylate, polyvinyl alcohol, carboxymethylcellulose (CMC), starch, hydroxypropylcellulose, reproducing cellulose, polyvinylpyrrolidone, tetrafluoroethylene, polyethylene, polypropylene, polyacrylic acid, ethylene-propylene-diene monomer (EPDM), sulfonated EPDM, styrene butadiene rubber (SBR), fluorine rubber, poly acrylic acid, and materials generated by substituting their hydrogens with Li, Na or Ca, etc., and may also contain their various copolymers.

The lithium secondary battery according to an embodiment of the present invention may include a negative electrode, a positive electrode, a separator interposed between the positive electrode and the negative electrode, and an electrolyte, and the negative electrode is the same as the above-described negative electrode.Since the negative electrode has been described above, the detailed description thereof is omitted here.

The positive electrode may include a positive electrode current collector and a positive electrode active material layer which is formed on the positive electrode current collector and contains the positive electrode active material.

In the positive electrode, the positive electrode current collector is not particularly limited as long as it has conductivity without causing a chemical change in the battery. For example, stainless steel, aluminum, nickel, titanium, calcined carbon, or what is generated by surface-treating stainless steel with carbon, nickel, titanium, silver, etc. may be used.Further, the positive electrode current collector may generally have a thickness of 3 to 500 µm, and the adhesive force of the positive electrode active material may be enhanced by forming fine irregularities on the surface of the current collector.It may be used as various forms such as a film, a sheet, a foil, a net, a porous body, a foam, and a nonwoven fabric.

The positive electrode active material may be a layered compound such as lithium cobalt oxide (LiCoO₂), lithium nickel oxide (LiNiO₂), or a compound substituted with one or more transition metals; lithium manganese oxides such as Li_{1+y}Mn_{2-y}O₄ (herein, y is between 0 and 0.33), LiMnO₃, LiMn₂O₃, and LiMnO₂; lithium copper oxide (Li₂CuO₂); vanadium oxides such as LiV₃O₈, LiFe₃O₄, V₂O₅, and Cu₂V₂O₇; lithium nickel oxide expressed by LiN_{1-y}M_{y}O₂ (herein, M = Co, Mn, Al, Cu, Fe, Mg, B or Ga, and y = 0.01 to 0.3); a ternary lithium manganese composite oxide expressed by LiMn_{2-y}M_{y}O₂ (where M = Co, Ni, Fe, Cr, Zn or Ta and, y = 0.01 to 0.1) or Li₂Mn₃MO₈ (where M = Fe, Co, Ni, Cu or Zn); LiMn₂O₄ in which a part of Li is substituted with an alkaline earth metal ion; disulfide compounds; Fe₂(MoO₄)₃; and a ternary lithium transition metal composite oxide expressed by Li(NiₐCo_{b}Mn_{c})O₂(0<a<1, 0<b<1, 0<c<1, a+b+c=1).The negative electrode of the present invention is used to improve the rapid charging performance of a high output battery, and the effects of the present invention will be maximized when selecting a lithium cobalt oxide which is advantageous for a high output in a positive electrode active material.

The positive electrode active material layer may contain a positive electrode conductive material and a positive electrode binder together with the above-described positive electrode active material.

At this time, the positive electrode conductive material is used to impart conductivity to the electrode, and any material may be used without limitation as long as it has electronic conductivity without causing a chemical change in a configured battery.Some examples of the conductive material include: graphite; a carbon-based material such as carbon black, acetylene black, ketjen black, channel black, furnace black, lamp black, thermal black, or carbon fiber; metal powders or metal fibers such as cooper, nickel, aluminum or silver; conductive whiskey such as zinc oxide and potassium titanate; conductive metal oxides such as titanium oxide; conducting polymers such as polyphenylene derivatives, and one or a mixture thereof may be used.

Further, the positive electrode binder improves the adhesive force between the positive electrode active material and the positive electrode current collector and attachment between positive electrode active material particles. Specific examples include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber (SBR), fluororubber, or various copolymers thereof, and one kind or a mixture of two or more kinds of them may be used.

Any one generally used as a separator in a secondary battery may be used as the separator as long as it separates the negative electrode from the positive electrode and provides a moving path of lithium ions, and particularly, a separator having a low resistance to ion movement of electrolyte and excellent moisturization capability of electrolyte solution is preferred. Specifically, porous polymer films, for example, porous polymer films made of polyolefin-based polymers such as ethylene homopolymers, propylene homopolymers, ethylene/butene copolymers, ethylene/hexane copolymers and ethylene/methacrylate copolymers may be used.Further, a nonwoven fabric made of a conventional porous nonwoven fabric, for example, glass fiber of high melting point, polyethylene terephthalate fiber, or the like may be used.In order to secure heat resistance or mechanical strength, a coated separator containing a ceramic component or a polymer material may be used, and may be optionally used as a single layer or a multilayer structure.

Examples of the electrolyte include an organic liquid electrolyte, an inorganic liquid electrolyte, a solid polymer electrolyte, a gel polymer electrolyte, a solid inorganic electrolyte, and a molten inorganic electrolyte which can be used in the production of a lithium secondary battery, but the present invention is not limited to these examples.

Specifically, the electrolyte may contain a non-aqueous organic solvent and a metal salt.

Examples of the non-aqueous organic solvent include N-methyl-2-pyrrolidinone, propylene carbonate, ethylene carbonate, butylenecarbonate, dimethyl carbonate, diethyl carbonate, gamma-Butyrolactone, 1,2-dimethoxyethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ethers, methyl pyrophosphate, ethyl propionate, etc.

In particular, among the carbonate-based organic solvents, ethylene carbonate and propylene carbonate, which are cyclic carbonates, are organic solvents of high viscosity and have high dielectric constants, so that lithium salts in the electrolyte can be more easily dissociated, and if the cyclic carbonate is mixed with a low viscosity, low dielectric constant linear carbonate such as dimethyl carbonate and diethyl carbonate in an appropriate ratio, an electrolyte solution having a higher electrical conductivity can be prepared.

A lithium salt may be used as the metal salt. The lithium salt is a material which may be easily dissolved in the non-aqueous electrolyte solution, and anions of the lithium salt may include one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻.

In addition to the electrolyte components, in order to improve the life characteristics of the battery, inhibit the battery capacity reduction, and improve the discharge capacity of the battery, the electrolyte may contain one or more of a haloalkylene carbonate-based compound such as difluoroethylene carbonate, pyridine, triethyl phosphate, triethanolamine, cyclic ether, ethylene diamine, n-glyme, and hexa phosphate triamide, nitrobenzene derivative, sulfur, quinone imine dye, N-substituted oxazolidinone, N, N-substituted imidazolidine, ethylene glycol dialkyl ether, ammonium salt, pyrrole, 2-methoxy ethanol or, aluminum trichloride.

According to another example of the present invention, there is provided a battery module including the secondary battery as a unit cell and a battery pack including the same.Since the battery module and the battery pack include a secondary battery having a high capacity and high cycle characteristics, they may be used as a power source of a medium or large size device selected from the group consisting of an electric car, a hybrid electric vehicle, a plug-in hybrid electric vehicle and a power storage system.

Hereinafter, preferred examples are presented to provide a desired embodiment, but the following examples are illustrative of the present invention, and various changes and modifications within the scope of the present invention are obvious to those skilled in the art, and it is natural that those changes and modifications belong to the scope of the appended claims.

### Example 1

### (Preparation of first negative electrode slurry)

A first negative electrode slurry was prepared by mixing uncoated artificial graphite having an average particle diameter (D₅₀) of 18 to 19 µm, carbon black as a conductive material, and styrene butadiene rubber (SBR) as a binder at the weight ratio of 96.5: 0.5: 3.

### (Preparation of second negative electrode slurry)

A second negative electrode slurry was prepared by mixing coated artificial graphite having an average particle diameter (D₅₀) of 16 to 17 µm, carbon black as a conductive material, and styrene butadiene rubber (SBR) as a binder at the weight ratio of 98.7: 0.5: 0.8.At this time, in the coated artificial graphite, the carbon coating layer coats the secondary particle artificial graphite core by carbonizing the pitch by heat-treating the pitch and the secondary particle artificial graphite to be used as the core at 1100°C under the N2 environment, and the carbon coating layer has a thickness of 50 nm according to the TEM analysis.

### (Preparation of negative electrode)

The first negative electrode slurry was coated on the lower portion of the cooper (Cu) metal thin film, which is the negative electrode current collector having a thickness of 10 µm, and the second negative electrode slurry was coated on the upper portion of the cooper (Cu) metal thin film, using a coater including a dual slot die, and the loading amount was adjusted so that the weight ratio of the uncoated artificial graphite and the coated artificial graphite becomes 50: 50.Thereafter, this was dried at a temperature of 60°C, roll-pressed, and then dried in a vacuum oven of 180°C for 10 hours.Thereafter, a negative electrode was manufactured by cutting a roll electrode, where a first negative electrode active material layer and a second negative electrode active material layer have been formed, to be a rectangle of 300 cm².

### Examples 2 to 4

A negative electrode was manufactured in the same manner as in the example 1 except that the weight ratio of the uncoated artificial graphite and the coated artificial graphite was adjusted as shown in Table 1 by adjusting the loading amount of the first negative electrode slurry and the second negative electrode slurry while coating the slurry, which has the same composition as that of the first negative electrode slurry and the second negative electrode slurry of the example 1, by using the coater.

### Comparative Example 1

A negative electrode was prepared in the same method as in example 1 except that the coated artificial graphite of the second negative electrode slurry was used instead of the uncoated artificial graphite when preparing the first negative electrode slurry (coated artificial graphite was used for both the first negative electrode active material layer and the second negative electrode active material layer).

### Comparative Example 2

A negative electrode was prepared in the same method as in example 1 except that the uncoated artificial graphite of the first negative electrode slurry was used instead of the coated artificial graphite when preparing the second negative electrode slurry (uncoated artificial graphite was used for both the first negative electrode active material layer and the second negative electrode active material layer).

### Comparative Example 3

### (Preparation of first negative electrode slurry)

A first negative electrode slurry was prepared by mixing uncoated artificial graphite having an average particle diameter (D₅₀) of 18 to 19 *µ*m*,* carbon black as a conductive material, and styrene butadiene rubber (SBR) as a binder at the weight ratio of 96.5: 0.5: 3.

### (Preparation of second negative electrode slurry)

A second negative electrode slurry was prepared by mixing coated natural graphite having an average particle diameter (D₅₀) of 16 to 17 *µ*m*,* carbon black as a conductive material, and styrene butadiene rubber (SBR) as a binder at the weight ratio of 98.7: 0.5: 0.8.At this time, in the coated natural graphite, the carbon coating layer coats the secondary particle natural graphite core by carbonizing the pitch by heat-treating the pitch and the secondary particle natural graphite to be used as the core at 1100°C under the N2 environment, and the carbon coating layer has a thickness of 40 nm according to the TEM analysis.

### (Preparation of negative electrode)

The first negative electrode slurry was coated on the lower portion of the cooper (Cu) metal thin film, which is the negative electrode current collector having a thickness of 10 *µ*m*,* and the second negative electrode slurry was coated on the upper portion of the cooper (Cu) metal thin film, using a coater including a dual slot die, and the loading amount was adjusted so that the weight ratio of the uncoated artificial graphite and the coated natural graphite becomes 50: 50.Thereafter, this was dried at a temperature of 60°C, roll-pressed, and then dried in a vacuum oven of 180°C for 10 hours.Thereafter, a negative electrode was manufactured by cutting a roll electrode, where a first negative electrode active material layer and a second negative electrode active material layer have been formed, to be a rectangle of 300 cm².

### Comparative Example 4

### (Preparation of first negative electrode slurry)

A first negative electrode slurry was prepared by mixing uncoated natural graphite, carbon black as a conductive material, and styrene butadiene rubber (SBR) as a binder at the weight ratio of 96.5: 0.5: 3.

### (Preparation of second negative electrode slurry)

A second negative electrode slurry was prepared by mixing coated artificial graphite having an average particle diameter (D₅₀) of 16 to 17 *µ*m*,* carbon black as a conductive material, and styrene butadiene rubber (SBR) as a binder at the weight ratio of 98.7: 0.5: 0.8.At this time, in the coated artificial graphite, the carbon coating layer coats the secondary particle artificial graphite core by carbonizing the pitch by heat-treating the pitch and the secondary particle artificial graphite to be used as the core at 1100°C under the N2 environment, and the carbon coating layer has a thickness of 50 nm according to the TEM analysis.

### (Preparation of negative electrode)

The first negative electrode slurry was coated on the lower portion of the cooper (Cu) metal thin film, which is the negative electrode current collector having a thickness of 10 *µ*m, and the second negative electrode slurry was coated on the upper portion of the cooper (Cu) metal thin film, using a coater including a dual slot die, and the loading amount was adjusted so that the weight ratio of the uncoated natural graphite and the coated artificial graphite becomes 50: 50.Thereafter, this was dried at a temperature of 60°C, roll-pressed, and then dried in a vacuum oven of 180°C for 10 hours.Thereafter, a negative electrode was manufactured by cutting a roll electrode, where a first negative electrode active material layer and a second negative electrode active material layer have been formed, to be a rectangle of 300 cm².

### Comparative Example 5

A negative electrode slurry was prepared by mixing coated artificial graphite, carbon black as a conductive material, and styrene butadiene rubber (SBR) as a binder of the example 1 at the weight ratio of 97.5: 0.5: 2.The negative electrode slurry was coated on copper (Cu) metal thin film which is the negative electrode current collector having a thickness of 10 *µ*m using a coater of a single slot die.Thereafter, a negative electrode was prepared in the same manner as in Example 1.

### Comparative Example 6

A negative electrode slurry was prepared by mixing uncoated artificial graphite, carbon black as a conductive material, and styrene butadiene rubber (SBR) as a binder of the example 1 at the weight ratio of 97.5: 0.5: 2.The negative electrode slurry was coated on copper (Cu) metal thin film which is the negative electrode current collector having a thickness of 10 *µ*m using a coater of a single slot die.Thereafter, a negative electrode was prepared in the same manner as in Example 1.

### Experimental Example 1: Measurement of pore resistance

An electrode assembly was manufactured by using negative electrodes for a lithium secondary battery prepared in examples 1 to 4 and comparative examples 1 to 6 as the working electrode and the counter electrode in the same manner, and interposing a polyethylene separator between the working electrode and the counter electrode.A symmetric cell was manufactured by injecting an electrolyte solution, which was obtained by dissolving 1M LiPF6, into a solvent which is obtained by mixing ethylene carbonate (EC) and diethylene carbonate (EMC) at the volume ratio of 1: 4.

After the frequency range of the symmetric cell was set to 10⁶ to 0.05Hz with electrochemical impedance analysis equipment, impedance was measured, and the electrolyte solution resistance was separated from the pore resistance to thereby measure Rp of the pore resistance.The results are shown in Table 1.

### Experimental Example 2: Lithium-plating SOC by rapid charging

Lithium plating experiment was performed to check rapid charging characteristics of the negative electrode for a lithium secondary battery of examples 1 to 4 and comparative examples 1 to 6.

First, after cutting the prepared negative electrode for a lithium secondary battery into a coin cell size, a polyolefin separator was interposed between a lithium foil which is the counter electrode of the negative electrode, and thereafter an electrolyte solution, where 1M LiPF6 had been dissolved, was injected into a solvent which had been generated by mixing ethylene carbonate (EC) and ethyl methyl carbonate (DEC) at the volume ratio of 50: 50, to thereby manufacture coin-type half cells of examples and comparative examples.

Thereafter, after three-cycle charging/discharging respective coin-type half cells including the negative electrode of examples and comparative examples to 1C, they were charged to 3C for 15 minutes, and the inflection point of the profile at the time of the first derivation (dQ/dV) was checked and li-plating SOC(%), which is SOC at the time when lithium precipitation occurs on the surface of the negative electrode, was quantized, and the result was shown in Table 1.

### Experimental Example 3: Evaluation of rapid charging performance

After discharging to 0.5C, 300 cycles were repeated at the charge rate of 1.7C, then the charge rate was measured and the ratio for the initial capacity was calculated, and the result is shown in Table 1.When the ratio for the initial capacity was 80% or more, it was indicated by "O", when the ratio for the initial capacity was 50% or less, it was indicated by "X", and when the ratio for the initial capacity was between 50% and 80%, it was indicated by "△".

**[Table 1]**

| | First negative electrode active material layer | Second negative electrode active material layer | Coatingmet hod | Poreresistance (Ω) | SOC(%) | Retention (%) |
|---|---|---|---|---|---|---|
| Example 1 | Uncoatedartifi cialgraphite | Coatedartificial graphite | Dualslotdie coating | 6 | 45 | ○ |
| | Weight ratio of uncoated artificial graphite and coated artificial graphite is 50: 50. | | | | | |
| Example 2 | Uncoatedartifi cialgraphite | Coatedartificial graphite | Dualslotdie coating | 8 | 44 | ○ |
| | Weight ratio of uncoated artificial graphite and coated artificial graphite is 45: 55. | | | | | |
| Example 3 | Uncoatedartifi cialgraphite | Coatedartificial graphite | Dualslotdie coating | 11 | 40 | ○ |
| | Weight ratio of uncoated artificial graphite and coated artificial graphite is 55: 45. | | | | | |
| Example 4 | Uncoatedartifi cialgraphite | Coatedartificial graphite | Dualslotdie coating | 14 | 37 | X |
| | Weight ratio of uncoated artificial graphite and coated artificial graphite is 70: 30. | | | | | |
| Compar ativeExa mple 1 | Coatedartificia 1graphite | Coatedartificial graphite | Dualslotdie coating | 8 | 42 | △ |
| Compar ativeExa mple 2 | Uncoatedartifi cialgraphite | Uncoatedartific ialgraphite | Dualslotdie coating | 12 | 35 | X |
| Compar ativeExa mple 3 | Uncoatedartifi cialgraphite | Coatednaturalgr aphite | Dualslotdie coating | 9 | 39 | △ |
| Compar ativeExa mple 4 | Uncoatednatur algraphite | Coatedartificial graphite | Dualslotdie coating | 15 | 32 | X |
| Compar ativeExa mple 5 | Coatedartificialgraphite | | Singleslotd iecoating | 18 | 28 | X |
| Compar ativeExa mple 6 | Uncoatedartificialgraphite | | Singleslotd iecoating | 23 | 23 | X |

Referring to Table 1, it is seen that the rapid charging performance has been improved in examples 1 to 3 including coated artificial graphite on the upper portion, compared to the negative electrode of comparative examples.Herein, the rapid charging performance of the negative electrode of the example 4, in which the weight ratio of the uncoated artificial graphite and the coated artificial graphite was 70: 30, was poor, compared to the negative electrode of the examples 1 to 3, and it was because the ratio of the coated artificial graphite was relatively low in the example 4.

The above description is merely illustrative of the technical idea of the present invention, and those skilled in the art to which the present invention pertains may make various modifications and variations without departing from the essential characteristics of the present invention.Therefore, the drawings disclosed in the present invention are not intended to limit the technical idea of the present invention but to describe the present invention, and the scope of the technical idea of the present invention is not limited by these drawings.The scope of protection of the present invention should be interpreted by the following claims, and all technical ideas within the scope equivalent thereto should be construed as being included in the scope of the present invention.

## Claims

1. A negative electrode for a lithium secondary battery, the negative electrode comprising:
a first negative electrode active material layer arranged on a current collector; and
a second negative electrode active material layer arranged on the first negative electrode active material layer,
wherein the first negative electrode active material layer contains uncoated artificial graphite, and
wherein the second negative electrode active material layer contains coated artificial graphite.

2. The negative electrode of claim 1, wherein a weight ratio of the uncoated artificial graphite to the coated artificial graphite is in a range of 4: 6 to 6: 4 based on a total weight of a negative electrode active material.

3. The negative electrode of claim 1, wherein a weight ratio of the uncoated artificial graphite to the coated artificial graphite is in a range of 44: 55 to 55: 45 based on a total weight of a negative electrode active material.

4. The negative electrode of claim 1, wherein a negative electrode active material of the first negative electrode active material layer is uncoated artificial graphite, and a negative electrode active material of the second negative electrode active material layer is coated artificial graphite.

5. The negative electrode of claim 1, wherein the coated artificial graphite is formed of an artificial graphite core and a carbon coating layer which coats the artificial graphite core.

6. The negative electrode of claim 1, wherein an average particle diameter of D₅₀ of the uncoated artificial graphite is in a range of 15 *µ*m to 22 *µ*m*.*

7. The negative electrode of claim 1, wherein an average particle diameter of D₅₀ of the coated artificial graphite is in a range of 13 *µ*m to 20 *µ*m*.*

8. The negative electrode of claim 1, wherein a content of a binder contained in the first negative electrode active material layer is in a range of 0.5 to 5% by weight in range greater than a content of a binder contained in the second negative electrode active material layer.

9. The negative electrode of claim 1, wherein particles of the uncoated artificial graphite are secondary artificial graphite particles formed by aggregation of one or more primary artificial graphite particles.

10. The negative electrode of claim 1, wherein particles of the coated artificial graphite are secondary artificial graphite particles formed by aggregation of one or more primary artificial graphite particles.

11. The negative electrode of claim 1, wherein the first negative electrode active material layer and the second negative electrode active material layer further includes a conductive material, and a content of the conductive material is in a range of 0.1 to 5% by weight of the negative electrode active material layer.

12. A lithium secondary battery including the negative electrode of claim 1.
